# EUROPÄISCHE PATENTANMELDUNG

(11) **EP 2 072 402 A1**
(43) Veröffentlichungstag der Anmeldung: **24.06.2009**
(21) Anmeldenummer: 08020790.5
(22) Anmeldetag: 29.11.2008
(51) Int. Cl.: B64G 1/40, B64G 5/00

(54) **Verfahren zum Betanken von Antriebssystemen von Raumfahrzeugen**

(30) Priorität: 17.12.2007 DE 102007061841
(71) Anmelder: Astrium GmbH, 85521 Ottobrunn (DE)
(72) Erfinder: Schwarting, Walter, 26127 Oldenburg (DE); Michaelis, Mark, Dr., 28203 Bremen (DE)
(74) Vertreter: Hansmann, Dierk

(57) **Zusammenfassung**

Bei einem Verfahren zum Betanken von Antriebssystemen von Raumfahrzeugen mit flüssigen Treibstoffen wird zunächst zumindest der mit dem jeweiligen Treibstoff zu befüllende Bereich des Antriebssystems mit einem im Treibstoff löslichen Gas gespült und befüllt, anschließend erfolgt die Füllung mit dem flüssigen Treibstoff und abschließend eine Bedrückung mit einem Inertgas. Dabei wird bei einem aus einem Oxidator-zweig und einem Brennstoff-Zweig bestehenden Antriebssystem die anfängliche Befüllung und Spülung der beiden Bereiche des Antriebssystems mit unterschiedlichen, jeweils im Oxidator bzw. im Brennstoff löslichen Gasen vorgenommen. Vorzugsweise wird der Oxidator-Zweig zunächst mit Stickstoffmonoxid-Gas (NO) gefüllt, während das Antriebssystem im Brennstoff-Zweig zunächst Ammoniak-Gas (NH₃) gefüllt wird.

## Beschreibung

Die Erfindung betrifft ein Verfahren zum Betanken von Antriebssystemen von Raumfahrzeugen mit flüssigen Treibstoffen, bei dem das zu betankende Antriebssystem mit einem Inertgas bedrückt wird.

Satelliten, Raum-Sonden und sonstige Raumfahrzeuge werden größtenteils mit lagerfähigen chemischen Treibstoffen angetrieben. Eine grundlegende Anforderung, die dabei an das Antriebssystem gestellt wird, ist eine gasfreie Förderung des Treibstoffs von den Treibstofftanks zu den Triebwerken. Gemäß den gegenwärtig bekannten und verwendeten Verfahren zum Betanken von derartigen Antriebssystemen wird bei der Betankung von Raumfahrzeugen das zu betankende Antriebssystem zunächst komplett mit einem Inertgas, z.B. Helium, Stickstoff, etc., gespült, um möglicherweise noch eingeschlossene Fremdgase zu eliminieren, und dann auf einen definierten Druck oberhalb der Dampfdrücke der verwendeten Treibstoffe bedrückt.

Die Bezeichnung Antriebssystem, wie sie hier verwendet wird, umfaßt dabei sowohl die Treibstofftanks selbst als auch im Tank angeordnete Elemente für die Handhabung des Treibstoffs, im Englischen als Propellant Management Device, PMD, bezeichnet, sowie das Leitungssystem von den Tanks zu den Triebwerksventilen, einschließlich der im Leitungssystem befindlichen Komponenten, wie z.B. Ventile, Druckregler, Treibstoff-Filter, Drosselelemente, Sensoren und Befüll-, Entleerungssowie Test-Anschlüsse.

Als lagerfähige Treibstoffe werden üblicherweise die nachfolgend aufgeführten Gruppen verwendet:
a) Brennstoffe:
   - Hydrazin (N₂H₄; H₂N-NH₂) sowie die Derivate des Hydrazins:

   - Monomethylhydrazin, MMH (H₂N-NHCH₃),
   - unsymmetrisches Dimethylhydrazin, UDMH (H₂N-N(CH₃)₂),
   - symmetrisches Dimethylhydrazin, SDMH (CH₃HN-NHCH₃)
b) Oxidatatoren:
   - Di-Stickstoff-Tetroxid NTO, N₂O₄ oder O₂N-NO₂,
   - verschiedene Mischungen von NTO mit Stickstoffmonoxid-Gas, NO, mit der Bezeichnung MON-X (mixed oxides of nitrogen) mit X Gewichtsprozent NO-Anteil.

Die Erstbetankung des Antriebssystems in einem voll integrierten Raumfahrzeug mit Treibstoff erfolgt auf der Erde, d.h., unter der Einwirkung der Erdbeschleunigung. Die Füllung der verschiedenen Komponenten des Antriebssystems mit Treibstoff unterliegt deshalb zum einen der Schwerkraft, mit der Folge einer senkrechten Ausrichtung der Treibstoffoberfläche bezogen auf den Erdbeschleunigungsvektor, und zum anderen bei kleinen Geometrien zusätzlich wirkenden Kapillarkräften, wie sie beispielsweise in Kapillarrohren und Sieben auftreten. Durch das zusammenspiel dieser beiden Kräfte läßt es sich nicht vermeiden, daß bei der Befüllung Inertgas-Restmengen im Antriebssystem verbleiben. Diese eingeschlossenen Gasrestmengen sind unter anderem durch Hinterschneidungen bedingt, z.B. in Ventilen, im Antriebssystem oder auch in den PMD-Elementen im Tank, durch Filter- bzw. Siebelemente, z.B. im Treibstofffilter im Antriebssystem oder in den PMD-Elementen im Tank, und durch Tot-Enden bzw. Sackleitungen im Antriebssystem, z.B. für Sensoren, Regler, Befüll- und Entlüftungsleitungen.

Obwohl derzeit bei den bekannten Betankungsverfahren ein erheblicher konstruktiver Aufwand betrieben wird, um jede Art eingeschlossener Gasrestmengen im Antriebssystem zu minimieren, ergeben sich in der Regel immer noch erhebliche verbleibende Gasmengen, die beim Betrieb des Antriebssystems zu berücksichtigen sind. Zum Beispiel sind die Triebwerke eigens für das Ansaugen einer definierten Gasmenge ausgelegt und in umfangreichen Tests speziell daraufhin optimiert. Weiterhin muß das Lageregelungs-System des Raumfahrzeuges für den Fall einer Gasförderung zu den Triebwerken sicher ausgelegt sein, was jedoch nur mit relativ hohem technischen Aufwand möglich ist. Zu große eingeschlossene Inertgas-Restmengen im Antriebssystem können schließlich den Betrieb des Raumfahrzeuges vollends unmöglich machen.

Ein Verfahren zum Betanken von Antriebssystemen mit flüssigen Treibstoffen ist nach der US 5 499 656 A bekannt, wobei das zu betankende Antriebssystem mit einem Inertgas (Helium) bedrückt wird.

Aufgabe der Erfindung ist es, ein Verfahren der eingangs genannten Art so auszubilden, daß die im Antriebssystem verbleibenden Restgasmengen auf ein absolutes Minimum reduziert bzw. daß diese nach Möglichkeit vollständig vermieden werden.

Die Erfindung löst diese Aufgabe dadurch, daß bei einem derartigen Verfahren zunächst zumindest der mit dem jeweiligen Treibstoff zu befüllende Bereich des Antriebssystems mit einem im Treibstoff löslichen Gas gespült und befüllt wird, daß anschließend die Füllung mit dem flüssigen Treibstoff erfolgt und daß abschließend eine Bedrückung mit einem Inertgas erfolgt.

Bei einer Betankung mit Di-Stickstoff-Tetroxid, NTO, sowie mit verschiedenen Derivaten MON-X unterscheidet sich das Betankungsverfahren gemäß der Erfindung von den bislang bekannten Verfahren dahingehend, daß im Oxidator-Zweig mit einer MON-X- oder NTO-Befüllung anstelle eines anfänglichen Spül- und Füllvorgangs des Antriebssystems mit Inertgas Stickstoffmonoxid-Gas, NO, verwendet wird. Statt Inertgas werden dadurch beim Befüllen Restmengen von Stickstoffmonoxid-Gas im Antriebssystem eingeschlossen. Dieses NO-Gas besitzt im Vergleich zu Inertgas den Vorteil, daß es eine sehr hohe Löslichkeit in NTO bzw. MON-X besitzt. Damit erfolgt eine vollständige Lösung der bei der Betankung im Antriebssystem verbleibenden Gasrestmengen im umgebenden Treibstoff. Der Gas-Lösungsprozess von NO-Gas im Oxidator erfolgt bei konstantem Betankungsdruck bereits in geringem Maße während der Betankung und später komplett nach einer finalen Tank-Bedrückung mit Inertgas vor dem Start des Raumfahrzeuges. Durch den Füllvorgang bedingte Inertgas-Restmengen werden somit innerhalb des gesamten Antriebsystems zuverlässig vermieden.

Bei der Betankung mit Hydrazin oder Derivaten des Hydrazin (MMH, UDMH und SDMH) wird bei dem Betankungsverfahren gemäß der Erfindung, analog zu der Befüllung des Oxidator-Zweiges, auch bei der Befüllung des Brennstoff-Zweiges mit Hydrazin und/oder dessen Derivaten für die Befüllprozedur anstelle von Inertgas Ammoniak-Gas zum Spülen und Füllen des Antriebssystems vor und während des Betankens verwendet. Ammoniak Gas besitzt im Vergleich zu Inertgasen eine sehr hohe Löslichkeit in Hydrazin und in dessen Derivaten. Bei der Betankung im Antriebssystem verbleibende Restmengen an Ammoniak Gas werden demzufolge im umgebenden Brennstoff vollständig gelöst.

Die Vorteile der Erfindung liegen dabei nicht nur in einem wesentlich reduzierten konstruktiven Aufwand bei der Auslegung der Antriebssysteme zum Zweck der Minimierung bzw. vermeidung von Restgasen, sondern auch in einer erhöhten Toleranz hinsichtlich verschiedener Systemparameter, wie z.B. der Neigung des Raumfahrzeuges, und möglicher Fehlerfälle oder Störungen während des Betankungsvorganges. Ferner können durch die Erfindung bereits bestehende Antriebssysteme, die zu große Gasrestmengen erzeugen, gleichsam "gas-frei" gemacht werden und es kann damit ein störungsfreier Betrieb der betreffenden Raumfahrzeuge ermöglicht werden. Schließlich werden ein geringerer Qualifizierungsaufwand für Triebwerke und Lageregelungs-Systeme und eine geringere Störanfälligkeit von Einbauten, z.B. von extra eingebrachten Entlüftungsröhrchen, erreicht. Für den Oxidator-zweig ergibt sich als weiterer Vorteil die positive Eigenschaft des Stickstoffmonoxids als Inhibitor, der die ansonsten gegebene Anfälligkeit des Titans gegenüber Spannungsrisskorrosion reduziert.

Nachfolgend soll die Erfindung anhand von Ausführungsbeispielen näher erläutert werden.

### 1. Betankung mit Di-Stickstoff Tetroxid NTO sowie die verschiedenen Derivate MON-1 bis MON-3

Das Antriebssystem auf der Oxidatorseite wird mit Stickstoffmonoxid-Gas, NO, gefüllt. Falls erforderlich, kann stattdessen auch ein bereits mit Inertgas bedrücktes Antriebssystem durch Entlüftung mit Stickstoffmonoxid-Gas gefüllt werden. Der Druck im Antriebssystem nach der NO-Befüllung ist dabei nicht maßgeblich, er sollte jedoch oberhalb der Dampfdruckkurve des NTO bzw. MON-X bei der relevanten Temperatur liegen. Das Gas NO ist bei Raumtemperatur ein Druckgas, das oberhalb seines Kritischen Punktes liegt. In Verbindung mit NTO- oder MON-X Füllungen im Antriebssystem zeigt NO jedoch eine sehr gute Gas-Löslichkeit. Nunmehr wird das Antriebssystem wie üblich flüssig befüllt. Alle Gasmengen, die in nichtventilierbaren Kavernen eingeschlossen sind, bestehen aus NO-Gas und gehen somit beim Betanken und während der finalen Inertgas-Bedrückung, die in der Regel mit Helium-Gas erfolgt, in dem flüssigen Oxidator, NTO oder MON-X, in Lösung, so daß keinerlei durch den Betankungsvorgang bedingte eingeschlossene Gasmengen innerhalb des Treibstoffes mehr verbleiben.

### 2. Betankung mit Monomethylhydrazin (MMH) sowie die Derivate Hydrazin sowie UDMH

Das Antriebssystem wird auf der Brennstoffseite mit Ammoniak-Gas, NH₃, unter einem Druck von 1 bar absolut gefüllt. Falls erforderlich, kann stattdessen auch ein bereits mit Inertgas bedrücktes Antriebssystem durch Entlüftung mit dem Ammoniak-Gas von 1 bar absolut gefüllt werden. Der Druck des Ammoniaks ist dabei insofern von Bedeutung, als sich dieses leicht in MMH oder Hydrazin löst und einen spezifizierten Wert nicht überschreiten darf. Damit die Ammoniak-Konzentration in der Lösung minimal bleibt, wird der Tank gegen ein knapp oberhalb von 1 bar absolut eingestelltes Entlastungs-Ventil gefüllt, welches die Aufgabe hat, Ammoniakgas während des Einfüllens der Flüssigkeit entweichen zu lassen. Alle Gasmengen, die in nichtventilierbaren Kavernen eingeschlossen sind, bestehen aus NH₃-Gas und gehen beim Füllen mit MMH oder Hydrazin und während der finalen Inertgas-Bedrückung, die in der Regel mit Helium-Gas erfolgt, in Lösung. Folglich verbleiben keinerlei durch den Betankungsvorgang bedingte eingeschlossene Restgasmengen im Antriebssystem.

Um letztendlich die Ammoniak-Konzentration auf ein erreichbares Minimum einzustellen, muß nach dem Ende der Flüssig-Befüllung der NH₃-Druck im Dampfraum durch Evakuieren des Dampfraumes auf den für den Tank erlaubten Minimaldruck, d.h. den maximalen Differenzdruck zum Umgebungsdruck, abgesenkt werden. Würde eine solche Entgasung nicht erfolgen und das System gegen einen höheren Ammoniak-Druck betankt werden, so könnten sich Konzentrationen von NH₃ in der Nähe des erlaubten Grenzwertes einstellen.

## Patentansprüche

1. Verfahren zum Betanken von Antriebssystemen von Raumfahrzeugen mit flüssigen Treibstoffen, bei dem das zu betankende Antriebssystem mit einem Inertgas bedrückt wird, **dadurch gekennzeichnet, daß** zunächst zumindest der mit dem jeweiligen Treibstoff zu befüllende Bereich des Antriebssystems mit einem im Treibstoff löslichen Gas gespült und befüllt wird, daß anschließend die Füllung mit dem flüssigen Treibstoff erfolgt und daß abschließend eine Bedrückung mit einem Inertgas erfolgt.

2. Verfahren nach Anspruch 1, **dadurch gekennzeichnet, daß** das Antriebssystem aus einem Oxidator-Zweig und einem Brennstoff-Zweig besteht und daß die anfängliche Befüllung und Spülung der beiden Bereiche des Antriebssystems mit unterschiedlichen, jeweils im Oxidator bzw. im Brennstoff löslichen Gasen erfolgt.

3. Verfahren nach Anspruch 2, **dadurch gekennzeichnet, daß** zum Betanken des Oxidator-Zweiges dieser zunächst mit Stickstoffmonoxid-Gas (NO) gefüllt wird.

4. Verfahren nach Anspruch 3, **dadurch gekennzeichnet, daß** der Oxidator aus Di-Stickstoff-Tetroxid (N₂O₄) besteht.

5. Verfahren nach Anspruch 3, **dadurch gekennzeichnet, daß** der Oxidator aus Mischungen von Di-Stickstoff-Tetroxid (N₂O₄) mit Stickstoffmonoxid-Gas (NO) mit X Gewichtsprozenten NO-Anteil (MON-X) besteht

6. Verfahren nach Anspruch 2, **dadurch gekennzeichnet, daß** zum Betanken des Brennstoff-Zweiges dieser zunächst Ammoniak-Gas (NH₃) gefüllt wird.

7. Verfahren nach Anspruch 6, **dadurch gekennzeichnet, daß** das Ammoniak-Gas (NH₃) unter einem Druck von etwa 1 bar absolut eingebracht wird.

8. Verfahren nach Anspruch 6 oder 7, **dadurch gekennzeichnet, daß** der Brennstoff aus Hydrazin (N₂H₄) besteht.

9. Verfahren nach Anspruch 6 oder 7, **dadurch gekennzeichnet, daß** der Brennstoff aus Monomethylhydrazin (H₂N-NHCH₃) besteht.

10. Verfahren nach Anspruch 6 oder 7, **dadurch gekennzeichnet, daß** der Brennstoff aus symmetrischem Dimethylhydrazin (CH₃HN-NHCH₃) besteht.

11. Verfahren nach Anspruch 6 oder 7, **dadurch gekennzeichnet, daß** der Brennstoff aus unsymmetrischem Dimethylhydrazin (H₂N-N(CH₃)₂) besteht.

12. Verfahren nach einem der Ansprüche 1 bis 11, **dadurch gekennzeichnet, daß** die anfängliche Befüllung des Antriebssystems bei einem Druck oberhalb der Dampfdrücke der verwendeten Treibstoffe erfolgt.

13. Verfahren nach einem der Ansprüche 1 bis 12, **dadurch gekennzeichnet, daß** die abschließende Inertgas-Bedrückung mit Helium-Gas erfolgt.
